# EUROPÄISCHE PATENTSCHRIFT

(11) **EP 3 961 866 B1**
(45) Veröffentlichungstag und Bekanntmachung des Hinweises auf die Patenterteilung: **17.06.2026**
(21) Anmeldenummer: 21192079.8
(22) Anmeldetag: 19.08.2021
(51) Int. Cl.: H02K 1/276, H02K 1/30, H02K 16/02

(54) **ROTOR FÜR EINEN ELEKTRISCHEN INNEN- ODER AUSSENLÄUFERMOTOR, SYSTEM AUS MEHREREN ROTOREN UND ELEKTRISCHER INNEN- ODER AUSSENLÄUFERMOTOR**
ROTOR FOR AN INTERNAL OR EXTERNAL ELECTRIC ROTOR MOTOR, SYSTEM COMPRISING A PLURALITY OF ROTORS AND AN INTERNAL OR EXTERNAL ROTOR MOTOR
ROTOR POUR UN MOTEUR ÉLECTRIQUE À ROTOR INTERNE OU EXTERNE, SYSTÈME COMPOSÉ D'UNE PLURALITÉ DE ROTORS ET MOTEUR ÉLECTRIQUE À ROTOR INTERNE OU EXTERNE

(30) Priorität: 21.08.2020 DE 102020121976
(43) Veröffentlichungstag der Anmeldung: 02.03.2022
(73) Patentinhaber: SCHUNK Electronic Solutions GmbH, 78112 St. Georgen (DE)
(72) Erfinder: Zilic, Mate Mateo, 78532 Tuttlingen (DE)
(74) Vertreter: DREISS Patentanwälte PartG mbB

(56) Entgegenhaltungen:
- DE-A1- 102016 103 310
- US-A1- 2019 103 791

## Beschreibung

Die Erfindung betrifft einen Rotor für einen elektrischen Innen- oder Außenläufermotor, insbesondere Torquemotor. Ferner betrifft die Erfindung ein System aus mehreren Rotoren und einen elektrischen Innen- oder Außenläufermotor.

Torquemotoren sind hochpolige, elektrische Direktantriebe. Sie weisen sehr hohe Drehmomente bei relativ kleinen Drehzahlen auf.

Rotoren für elektrische Innenläufermotoren sind im Speichendesign bekannt. Der Rotor ist als Hohlwelle ausgebildet und umfasst auf einer Kreisbahn um eine Rotorachse angeordnete Zähne. Entlang der Kreisbahn sind zwischen den Zähnen Magnete angeordnet, welche Pole in den Zähnen erzeugen. Zur Ausbildung der Pole in den Zähnen sind die Magnete im Rotor derart angeordnet, dass Nordpol zu Nordpol und Südpol zu Südpol gerichtet sind. Die Magnete können als Permanentmagnete ausgebildet sein. An die Zähne schließt ein Verbindungselement an, welches die Zähne verbindet. Die Zähne weisen jeweils senkrecht zur Rotorachse eine vordere Stirn und eine hintere Stirn auf, wobei die vorderen Stirnen und die hinteren Stirnen jeweils eine Stirnseite bilden.

Die im Stand der Technik, insbesondere aus der DE 10 2017 218 152 A1, bekannten Rotoren für Innenläufermotoren weisen einen radial innenliegenden Verbindungabschnitt in Form einer Verbindungshülse zum Zusammenhalten der Zähne bzw. der Pole auf. Der Verbindungsabschnitt erstreckt sich dabei in axialer Richtung zwischen beiden Stirnseiten. Insbesondere bei flachen Rotoren ist der Verbindungsabschnitt schwer spanend herzustellen. Außerdem ist es vorteilhaft die Verbindungshülse massiv auszuführen, um eine ausreichende mechanische Stabilität des Rotors zu gewährleisten. Die Montage des Rotors erfolgt durch das Aufbringen des Rotors auf eine Achse. Die DE 694 09 889 T2 offenbart einen Rotor mit radial innenliegenden Verbindungsabschnitten, welche als Kurzschlusselement dienen.

Aus der DE 11 2010 003 859 T5 ist ein Rotor mit zwei zu den Zähnen separat ausgebildeten magnetischen Endplatten bekannt.

Aus der CN 2 06 575 251 U ist ein Rotor mit Zähnen und magnetischen Endplatten bekannt, welche aus einer Vielzahl von einzelnen separat zueinander ausgebildeten Stanzplatten gebildet werden.

Die GB 2 062 977 A offenbart einen Wechselstromgenerator mit einem Pole aufweisenden inneren Rotor und mit zwei Befestigungselementen zur Befestigung der Pole.

Aus der WO 2009/ 116 935 A1 ist ein Rotor und ein Verfahren zur Herstellung des Rotors bekannt, wobei der Rotor Zähne und einen Montagering aufweist und wobei der Montagering nach dem Einsetzen der Magnete und vor dem Betrieb des Rotors zur Gewichtseinsparung entfernt wird.

Die DE 10 2016 103 310 A1 offenbart einen Rotor mit zwei nicht magnetisch und separat zu den Zähnen ausgebildeten Endplatten.

Aus der US 2019/0103791 A1 ist ein Rotor mit axial erstreckenden Magneten und mit radial erstreckenden Magneten offenbart, wobei diese voneinander isoliert ausgebildet sind.

Die Erfindung stellt sich die Aufgabe, einen Rotor für einen elektrischen Innen- oder Außenläufermotor bereitzustellen, welcher einfach herzustellen ist, eine geringe Masse aufweist und eine Montagemöglichkeit für die Rotorwelle aufweist.

Die Aufgabe wird durch einen Gegenstand mit den Merkmalen des Patentanspruchs 1 gelöst. Folglich ist das Verbindungselement als Verbindungsring ausgebildet und an oder in einer der beiden Stirnseiten angeordnet.

Der Verbindungsring und die Zähne sind einstückig ausgebildet. Es kann ein Verbindungsring an einer Stirnseite oder je Stirnseite ein Verbindungsring vorgesehen sein. Der Verbindungsring kann dabei die Stirnseite abdecken, so dass die abgedeckte Stirnseite nicht sichtbar ist. In diesem Fall dient die abgedeckte Stirnseite nur als Hilfsebene. Aufgrund der Anordnung des oder der Verbindungsringe an der oder den Stirnseiten sind die Zähne einfach herzustellen, da radial innen kein Verbindungselement vorgesehen werden muss. Zudem weist der gesamte Rotor weniger Masse auf, da kein Verbindungselement entlang der axialen Erstreckung der Zähne vorgesehen sein muss. Darüber hinaus muss der Verbindungsring auch nicht derart massiv ausgeführt werden, da die mechanische Stabilität der Zähne und der Magnete nicht vom Verbindungsring in der axialen Richtung abhängt. Zudem bietet die Anordnung des Verbindungsrings an einer oder beiden Stirnseiten eine einfache Montagemöglichkeit der Rotorwelle. Die Magnete können zwischen den Zähnen zur Montage verklebt werden.

Der Verbindungsring kann aus einem ferromagnetischen Material gebildet sein. Der Verbindungsring bildet ein zwischen den einzelnen Polen Kurzschlussverluste erzeugendes magnetisches Kurzschlusselement. Der Verbindungsring ist dabei derart ausgebildet, dass im Betrieb des Rotors der Kurzschluss zumindest im Wesentlichen an oder in der an den Verbindungsring angrenzenden Stirnseite erfolgt. Durch die Ausbildung des Verbindungsrings werden die Kurzschlussverluste des Rotors zur Stirnseite hin verlagert. Im Gegensatz zum Stand der Technik mit der radial innenliegenden Verbindungshülse kann ein entlang der axialen Erstreckung der Zähne sich bildender magnetischer Kurzschluss vermieden werden. Außerdem können durch Auslegung des Verbindungsrings vergleichsweise geringe Kurzschlussverluste erzielt werden. Eine höhere Flexibilität der Auslegung des Verbindungsrings ergibt sich insbesondere dadurch, dass der Verbindungsring hinsichtlich der mechanischen Stabilität nicht massiv ausgeführt werden muss.

In radialer Richtung weisen die Zähne eine Zahnstärke und der Verbindungsring eine Ringstärke auf. Für die Reduzierung der Kurzschlussverluste ist vorteilhaft, wenn die Ringstärke kleiner als die Zahnstärke ausgebildet ist. Das Verhältnis Ringstärke zu Zahnstärke liegt in einem Bereich zwischen 1:5 und 2:3, insbesondere bei 1:2. Je kleiner der Verbindungsring ausgebildet ist, desto geringer ist die Masse des Verbindungsrings und desto mehr Masse wird beim Rotor eingespart. Die Grenze der Auslegung wird durch die mechanische Stabilität des Rotors bzw. des Verbindungsrings bestimmt. Mit einer geringeren Masse des Verbindungsrings geht eine Reduzierung des Verlusts der Magnetstärke an den Polen einher.

Ferner ist vorteilhaft, wenn der Verbindungsring sich zumindest im Wesentlichen von der an den Verbindungsring angrenzenden Stirnseite axial in die von anderen Stirnseite abgewandten Richtung erstreckt. Der Verbindungsring ist folglich erhaben auf der jeweiligen Stirnseite vorgesehen.

Ferner ist vorteilhaft, dass der Verbindungsring zumindest teilweise in axialer Richtung an die Zähne anschließt und damit in axialer Richtung neben den Zähnen angeordnet ist. Allerdings ist ebenfalls denkbar, dass der Verbindungsring mehrere Abschnitte aufweist. Dabei kann ein Abschnitt in axialer Richtung innerhalb der Zähne und ein Abschnitt in axialer Richtung neben den Zähnen angeordnet sein. Die Abschnitte des Verbindungsrings können ebenfalls durch unterschiedliche Materialien, insbesondere ferromagnetische nicht ferromagnetische Materialien, oder separate Bauteile ausgebildet sein.

Nicht von der Erfindung umfasst ist ein Beispiel für die Montage, wenn die Ringstärke gleich der Zahnstärke ausgebildet ist.

Vorteilhafterweise schließt der Verbindungsring bündig mit den Zähnen radial innen oder radial außen ab, wobei radial innen die Innenumfangsfläche der Hohlwelle bzw. der Zähne und radial außen die Außenumfangsfläche der Hohlwelle bzw. der Zähne betrifft. Ein bündiges Abschließen des Verbindungsrings mit den Zähnen radial innen führt vorteilhafterweise zu einer geringeren Eigenträgheit des Rotors.

Ferner ist vorteilhaft, wenn in axialer Richtung zwischen den Stirnseiten die Zähne eine Zahnlänge und der Verbindungsring eine Ringlänge aufweist. Es ist als vorteilhaft anzusehen, wenn die Ringlänge kleiner als die Zahnlänge ausgeführt ist. Es hat sich als besonders vorteilhaft ergeben, wenn das Verhältnis Ringlänge zu Zahnlänge in einem Bereich zwischen 1:10 und 1:3 liegt.

Weiterhin hat es sich als besonders vorteilhaft ergeben, wenn das Verhältnis Ringlänge zu Zahnlänge 1:6 beträgt.

Nicht von der Erfindung umfasst ist ein Beispiel, bei dem in den Zähnen in axialer Richtung verlaufende Löcher zum Montieren des Verbindungsrings und/oder zum Montieren einer Rotorwelle vorgesehen sind.

Dabei kann in jedem Zahn, in jedem zweiten, oder in jedem dritten Zahn ein Loch vorgesehen sein. Es können ferner Löcher im Verbindungsring vorgesehen sein, welche zur Montage an den Zähnen und an der Rotorwelle dienen. Alternativ können die Löcher an der an den Verbindungsring angrenzenden Stirnseite freiliegend ausgebildet sein, da der Verbindungsring sich radial nicht über die Löcher erstreckt.

Die vorliegende Aufgabe wird ebenfalls durch ein System mit den Merkmalen des Patentanspruchs 7 gelöst. Das System umfasst mindestens zwei axial hintereinander angeordnete Rotoren gemäß den Ansprüchen 1 bis 6, wobei zwischen den Zähnen zweier Rotoren mindestens ein Verbindungsring vorgesehen ist. Es ist denkbar, dass jeder Rotor in dem System mindestens einen Verbindungsring aufweist. Ferner ist denkbar, dass für zwei aneinander angrenzende Rotoren nur ein Verbindungsring vorgesehen ist.

Die zugrundeliegende Aufgabe wird ebenfalls durch einen elektrischen Innen- oder Außenläufermotor, insbesondere Torquemotor, mit den Merkmalen des Patentanspruchs 8 gelöst. Folglich umfasst der Motor einen erfindungsgemäßen Rotor oder ein erfindungsgemäßes System. Um den Rotor oder um die Rotoren ist mindestens ein Stator mit mindestens drei Spulen zum Erzeugen eines magnetischen Flusses angeordnet, wobei der Stator mit dem Rotor zum Erzeugen der Drehbewegung des Rotors oder der Rotoren zusammenwirkt.

Es ist ferner vorteilhaft, wenn die Rotorwelle an einem oder mehreren Verbindungsringen der Rotoren montiert ist. Dadurch wird eine einfache Montage der Rotorwelle am Rotor bzw. Motor ermöglicht.

Vorteilhafterweise wird die Rotorwelle im montierten Zustand zumindest teilweise nicht von mindestens einem Rotor umgeben. Dadurch kann verhindert werden, dass die Rotorwelle zu Kurzschlussverlusten entlang der axialen Erstreckung der Zähne führt.

Weitere Einzelheiten und vorteilhafte Ausgestaltungen der Erfindung sind der folgenden Beschreibung zu entnehmen, anhand derer eine in den Figuren dargestellte Ausführungsform der Erfindung näher beschrieben und erläutert ist.

Es zeigen:
- Figur 1: eine schematische Darstellung eines aus dem Stand der Technik bekannten Rotors im Speichendesign;
- Figur 2: eine schematische Darstellung des Rotors der Figur 1 mit Magneten;
- Figur 3: eine schematische Darstellung eines erfindungsgemäßen Rotors im Speichendesign ohne Magneten;
- Figur 4: eine schematische Darstellung des in Figur 3 dargestellten Rotors mit Magneten;
- Figur 5: eine schematische Darstellung des in Figur 3 dargestellten Rotors mit Perspektive auf den Verbindungsring ohne Magneten;
- Figur 5a: ein vergrößerter Ausschnitt der Darstellung der Figur 5 gemäß Detail V; und
- Figur 6: eine schematische Explosionsansicht des in Figur 3 dargestellten Rotors mit Magneten, und einem zu montierenden Rotorwellenflansch.

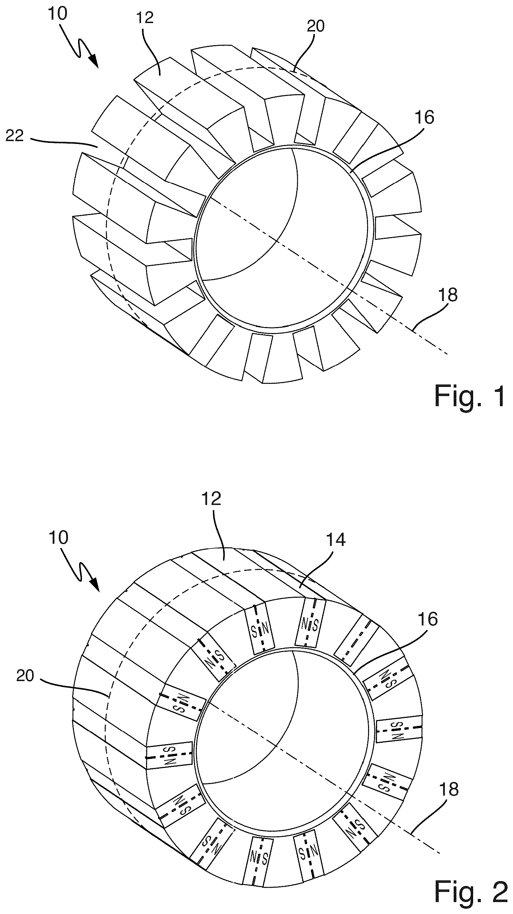

In Figur 1 und 2 ist ein aus dem Stand der Technik bekannter Rotor 10 für einen elektrischen Innenläufermotor, insbesondere einen Torquemotor, dargestellt. Der Rotor 10 umfasst Zähne 12, Magneten 14, und ein als Verbindungshülse 16 ausgebildetes Verbindungselement 16. Der Rotor 10 ist um die Rotorachse 18 drehbar. Die Zähne 12 sind auf einer Kreisbahn 20 um die Rotorachse 18 angeordnet. Die Rotor 10 bildet eine Hohlwelle aus, wobei die Verbindungshülse 16 den radial inneren, der Rotorachse 18 zugwandten Abschnitt des Rotors 10 bildet. Die Zähne 12 und die Verbindungshülse 16 weisen dieselbe axiale Erstreckung entlang der Rotorachse 18 auf. Der Rotor 10 ist aus einem ferromagnetischen Material ausgebildet. Im Betrieb des Rotors 10 bildet die Verbindungshülse 16 einen magnetischen Kurzschluss zwischen zwei Zähnen 12, wobei der Kurzschlussverluste entlang der gesamten axialen Erstreckung der Zähne 12 bzw. der Verbindungshülse 16 auftreten können.

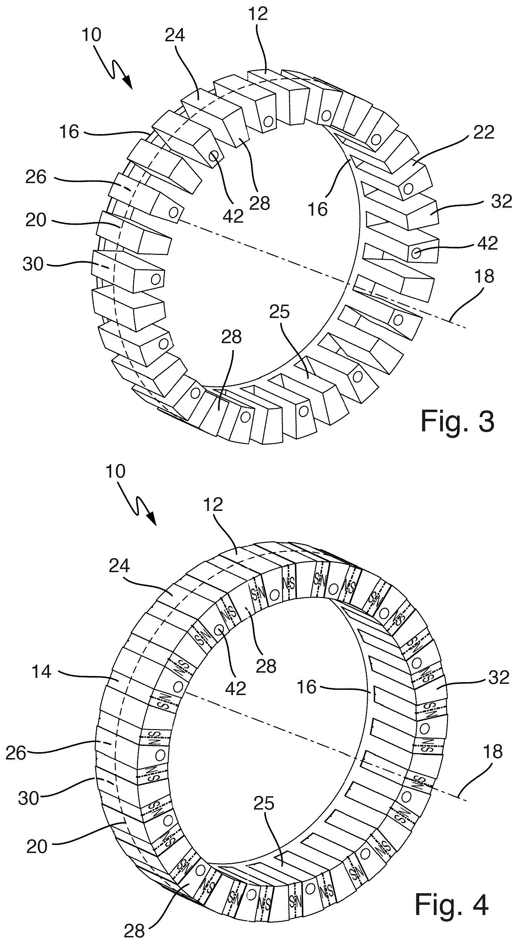

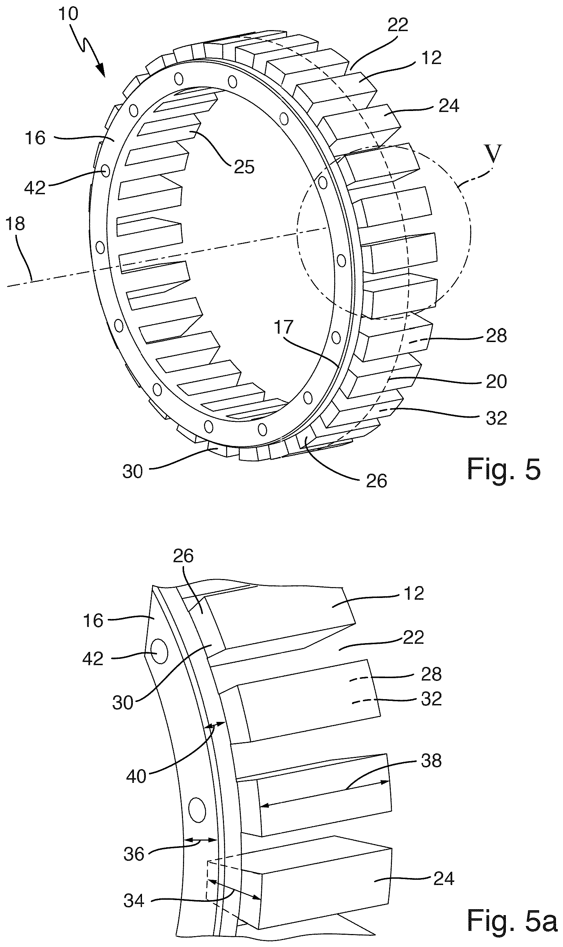

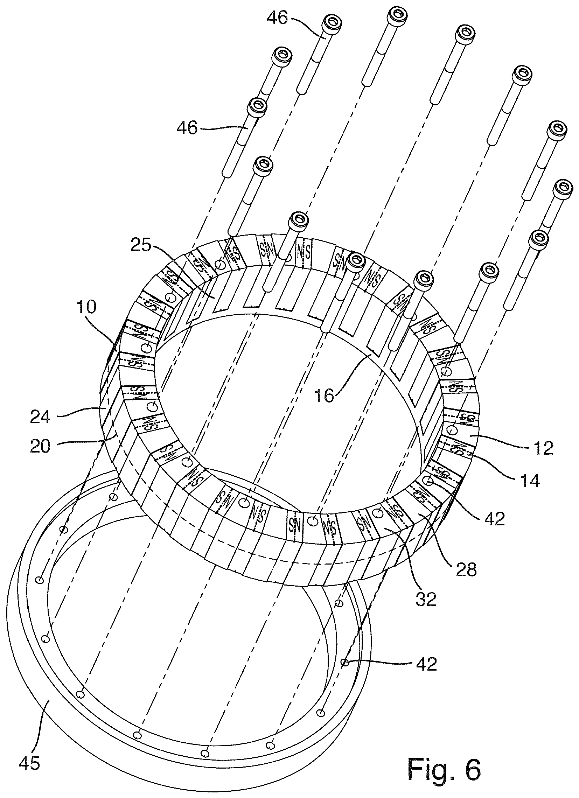

In den Figuren 3 bis 6 ist ein erfindungsgemäßer Rotor 10 dargestellt, wobei in den Figuren 1 und 2 entsprechende Bauteile mit entsprechenden Bezugszeichen versehen sind. Die Figuren 3 und 5 stellen den Rotor 10 ohne Magneten 14 dar. In Figur 4 und 6 ist der Rotor 10 mit den Magneten 14 dargestellt. Der Rotor 10 umfasst entsprechend der Ausführung gemäß den Figuren 1 und 2 auf einer Kreisbahn 20 um eine Rotorachse 18 angeordnete Zähne 12 und zwischen den Zähnen 12 vorgesehene Magneten 14. Die Rotorachse 18 entspricht der Drehachse der Rotors 10.

Die Zähne 12 sind durch einen als Verbindungsring 16 ausgebildetes Verbindungselement 16 miteinander verbunden. Die Zähne 12 sind in axialer Richtung trapezförmig ausgebildet, wobei sich die Zähne 12 in von der Rotorachse 18 abgewandter Richtung verbreitern. Alternativ können die Zähne 12 einen rechteckigen Querschnitt aufweisen. Jeder Zahn 12 weist in radialer Richtung freie Enden 22, 23 auf, wobei das freie Ende 22 radial außen, auf der der Rotorachse 18 abgewandten Seite der Zähne 12 angeordnet ist und wobei das freie Ende 23 radial innen, auf der der Rotorachse 18 zugewandten Seite der Zähne 12 angeordnet ist. Die freien Enden 22, 23 können z.B. eine runde oder ebene Fläche aufweisen. Ferner weist jeder Zahn 12 in axialer Richtung eine vordere Stirn 26 und eine hintere Stirn 28 auf. Die vorderen Stirnen 26 der Zähne 12 bilden eine Stirnseite 30 und die hinteren Stirnen 28 bilden eine Stirnseite 32. Die vorderen Stirnen 26 liegen mit der Stirnseite 30 zumindest im Wesentlichen in einer Ebene, wobei denkbar ist, dass nicht alle vorderen Stirnen 26 in dieser Ebene liegen. Dies gilt analog für die hinteren Stirnen 28 und die Stirnseite 32. Die Zähne 12 sind aus einem ferromagnetischen Material insbesondere in einem Sinterverfahren oder einem additiven Fertigungsverfahren hergestellt. Die Zähne 12 sind derart auf der Kreisbahn 20 angeordnet, dass entlang der Kreisbahn 20 zwischen zwei Zähnen 12 jeweils eine Zahnlücke 22 ausgebildet ist, welche für den Fall der trapezförmigen Zahngeometrie eine konstante Lückenbreite aufweist.

In den Zahnlücken 22 können Magnete 14 angeordnet werden. Aufgrund der konstanten Lückenbreite können Magnete 14 mit konstantem Querschnitt verwendet werden. Die Magnete 12 sind in den Zahnlücken 22 derart angeordnet, dass die Nordpole N zweier benachbarter Magnete 14 zueinander gewandt sind. Analog verhält es sich mit den Südpolen S der Magnete 14. Folglich entsteht jeweils ein Pol im Inneren eines Zahns 12, der mit dem daran anzuordnenden Stator des Innenläufermotors zusammenwirkt. Über den Umfang des Rotors 10 sind die Zähne 12 abwechselnd als Nordpol N oder als Südpol S ausgebildet. Die Magnete 14 können zur Befestigung am Rotor 10 mit den Zähnen 12 verklebt werden. Es ist vorteilhaft, dass sowohl die Zähne 12 als auch die Magnete 14 im montierten Zustand von radial innen und radial außen einfach zugänglich sind.

Zur Verbindung der Zähne 12 ist der Verbindungsring 16 vorgesehen. Der Verbindungsring 16 ist insbesondere in Fig. 5 ersichtlich. Der Verbindungsring 16 weist bei der gezeigten Ausführungsform einen rechteckigen Querschnitt auf. Der Verbindungsring 16 ist mit den Zähnen 12 einstückig verbunden und grenzt an die Stirnseite 30. Der Verbindungsring 16 ist gegenüber der Stirnseite 30 in axialer Richtung erhaben und nur neben der Stirnseite 30 vorgesehen. Folglich ist entgegen des in den Figuren 1 und 2 gezeigten Rotors 10 keine als Verbindungshülse 16 ausgebildetes Verbindungselement 16 innerhalb der Zähne 12 vorgesehen. Da kein Verbindungselement 16 innerhalb der Zähne 12 vorgesehen ist, sind die Zähne 12 bzw. die Zahnlücken 22 besonders einfach herzustellen. Der Verbindungsring 16 ist insbesondere einstückig mit den Zähnen 12 hergestellt, sodass dieser aus ferromagnetischen Materialen ausgebildet ist. Es ist denkbar, dass der Verbindungsring 16 als separates Bauteil ausgebildet ist. In diesem Fall kann der Verbindungsring 16 auch eine zu den Zähnen 12 unterschiedliches Material aufweisen. Zudem kann die Verbindungsring 16 eine von der Ausführungsform abweichende Geometrie aufweisen.

In der gezeigten Ausführungsform schließt der Verbindungsring 16 mit dem inneren freien Ende 23 der Zähne 12 bündig ab. In radial äußerer, von der Rotorachse 18 abgewandter Richtung, überragen die Zähne 12 den Verbindungsring 16. Es ist folglich bei Gewährleistung der mechanischen Stabilität ein geringes Gewicht für den Verbindungsring 16 erforderlich, da der Verbindungsring 16 nicht über die gesamte axiale Erstreckung und nicht über die gesamte radiale Erstreckung der Zähne 12 vorgesehen ist. Der Verbindungsring 16 kann alternativ bündig mit dem radial äußeren, dem der Rotorachse abgewandten freien Ende 23 der Zähne abschließen, wobei die Zähne nach radial innen den Verbindungsring 16 überragen. Der Verbindungring 16 zeichnet sich ferner dadurch aus, dass eine Fase 17 an der der Stirnseite abgewandten Seite des Verbindungsrings 16 vorgesehen ist, sodass in einfacher Weise eine Rotorwelle 44 oder ein Rotorwellenflansch 45 auf den Verbindungsring angebracht werden kann.

Figur 5a zeigt einen vergrößerten Ausschnitt des Rotors 10 gemäß Merkmal V der Figur 5. Dabei sind ausschnittsweise vier Zähne 12 und ein Abschnitt des Verbindungsrings 16 gezeigt. Die Zähne 12 weisen in radialer Richtung eine Zahnstärke 34 auf und der Verbindungsring 16 weist in radialer Richtung eine Ringstärke 36 auf. In dieser Ausführungsform beträgt das Verhältnis Ringstärke 36 zu Zahnstärke 34 2:3. Zudem weisen die Zähne 12 in axialer Richtung eine Zahnlänge 38 auf und der Verbindungsring 16 in axialer Richtung eine Ringlänge 40 auf. Die Ringlänge 40 ist dabei kleiner als die Zahnlänge 38 ausgebildet. Das Verhältnis Ringlänge 40 zur Zahnlänge 38 beträgt 1:6. Eine Gewichtseinsparung wird durch die Ausgestaltung des Verbindungsrings 16 nicht entlang der gesamten axialen und radialen Erstreckung der Zähne 12 erzielt. Ferner steigt durch die Anordnung des Verbindungsrings 16 nur an der Stirnseite 30 die Flexibilität hinsichtlich der Auslegung des Verbindungsrings 16, wodurch ebenfalls eine signifikante Verringerung der Kurzschlussverluste des Rotors 10 ermöglicht wird.

In Figur 6 ist eine Explosionsansicht einer beispielhaften Montagemöglichkeit eines Rotors 10 gezeigt. Die Zähne 12 weisen in axialer Richtung Löcher 42 zum Montieren des Verbindungsrings 16 und/oder zum Montieren der Rotorwelle 44 auf. In diesem Fall ist ein Rotorwellenflansch 45 gezeigt. Ferner weist der Verbindungsring 16 und der Flansch 45 Löcher 42 auf. Zur Montage werden Schrauben 46 von der hinteren Stirnseite 32 durch die Zähne 12 und den Verbindungsring 16 durchgeführt und in den Flansch 45 eingebracht. Die Löcher 42 sind in dieser Ausführungsform in jedem zweiten Zahn 12 vorgesehen, wobei auch in jedem Zahn 12 oder in jedem dritten Zahn 12 ein Loch 42 vorgesehen sein kann. Folglich ist eine einfache Montage des Rotors 10 an eine Rotorwelle 44 gewährleistet.

Die Magnete 14 bilden im Betrieb entlang der Kreisbahn 20 abwechselnd einen Nordpol N und einen Südpol S in den Zähnen 12. Insofern der Verbindungsring 16 einstückig mit den Zähnen 12 verbunden ist und sowohl die Zähne 12 als auch der Verbindungsring 16 aus einem ferromagnetischen Material hergestellt sind, existiert eine magnetische Verbindung zwischen zwei benachbarten Zähnen 12, welche als Nordpol N und Südpol S ausgebildet sind. Aufgrund der Verbindung über der Verbindungsring 16 kann es zu Kurzschlussverlusten im Rotor kommen. Allerdings bietet der Verbindungsring 16 gegenüber der Verbindungshülse 16 gemäß Figur 1 und 2 zur Verbindung der Zähne 12 den Vorteil, dass die Ausgestaltung des Verbindungsrings 16 an der Stirnseite 30 flexibler möglich ist und, dass der Verbindungsring 16 nicht massiv entlang der gesamten axialen Erstreckung der Zähne 12 ausgebildet sein muss. Folglich ist es möglich, geringere Kurzschlussverluste im Rotor zu erzielen.

## Patentansprüche

1. Rotor (10) für einen elektrischen Innen- oder Außenläufermotor, insbesondere Torquemotor, mit auf einer Kreisbahn (20) um eine Rotorachse (18) angeordneten, axial durchgängig ausgebildeten Zähnen (12), mit auf der Kreisbahn (18) zwischen den Zähnen (12) angeordneten Magneten (14) zum Erzeugen von Polen in den Zähnen (12), mit einem an die Zähne (12) anschließenden, und die Zähne (12) verbindenden Verbindungsabschnitt (16),
wobei die Zähne (12) jeweils senkrecht zur Rotorachse (18) eine vordere Stirn (26) und eine hintere Stirn (28) aufweisen, sodass die vorderen Stirnen (26) und die hinteren Stirnen (28) jeweils eine Stirnseite (30, 32) bilden, wobei der Verbindungsabschnitt (16) als Verbindungsring (16) ausgebildet ist und an oder in einer der beiden Stirnseiten (30, 32) angeordnet ist,
wobei der Verbindungsring (16) ein magnetisches Kurzschlusselement bildet, so dass im Betrieb ein magnetischer Kurzschluss zwischen den Polen zumindes an oder in der an den Verbindungsring (16) angrenzenden Stirnseite (30, 32) erfolg,
und wobei die Zähne (12) in radialer Richtung eine Zahnstärke (34) aufweisen und dass der Verbindungsring (16) in radialer Richtung eine Ringstärke (36) aufweist, **dadurch gekennzeichnet,**
**dass** der Verbindungsring (16) mit den Zähnen (12) einstückig ausgebildet ist und
**dass** das Verhältnis Ringstärke (36) zu Zahnstärke (34) in einem Bereich zwischen 1:5 und 2:3, insbesondere bei 1:2, liegt.

2. Rotor (10) nach Anspruch 1, **dadurch gekennzeichnet, dass** sich der Verbindungsring (16) zumindest im Wesentlichen von der an den Verbindungsring (16) angrenzenden Stirnseite (30, 32) axial weg erstreckt.

3. Rotor (10) nach einem der vorhergehenden Ansprüche, **dadurch gekennzeichnet, dass** der Verbindungsring (16) mit den Zähnen (12) in radial nach innen, hin zur Rotorachse (18), oder radial nach außen, weg von der Rotorachse (18), gewandter Richtung bündig abschließt.

4. Rotor (10) nach einem der vorhergehenden Ansprüche, **dadurch gekennzeichnet, dass** die Zähne (12) in axialer Richtung eine Zahnlänge (38) aufweisen, die sich zwischen den Stirnseiten (30, 32) erstreckt,
dass der Verbindungsring (16) in axialer Richtung eine Ringlänge (40) aufweist, und
dass die Ringlänge (40) kleiner als die Zahnlänge (38) ist.

5. Rotor (10) nach Anspruch 4, **dadurch gekennzeichnet, dass** das Verhältnis Ringlänge (38) zu Zahnlänge (40) in einem Bereich zwischen 1:10 und 1:3, insbesondere bei 1:6, liegt.

6. Rotor (10) nach einem der vorhergehenden Ansprüche, **dadurch gekennzeichnet, dass** in den Zähnen (12) in axialer Richtung verlaufende Löcher (42) zum Montieren des Verbindungsringes (16) und/oder zum Montieren einer Rotorwelle (44) vorgesehen sind.

7. System aus mindestens zwei axial hintereinander angeordneten Rotoren (10) nach den Ansprüchen 1 bis 6, **dadurch gekennzeichnet, dass** mindestens ein Verbindungsring (16) zwischen zwei aneinander angrenzenden Rotoren (10) vorgesehen ist.

8. Elektrischer Innen- oder Außenläufermotor, insbesondere Torquemotor, mit einem Rotor (10) nach den Ansprüchen 1 bis 6 oder mit einem System nach Anspruch 7, **dadurch gekennzeichnet, dass** um den Rotor (10) oder die Rotoren (10) mindestens ein Stator mit mindestens drei Spulen zum Erzeugen eines magnetischen Flusses angeordnet ist, wobei der Stator mit den Polen des Rotors (10) zum Erzeugen der Drehbewegung des Rotors (10) bzw. der Rotorwelle (44) zusammenwirkt.

9. Motor nach Anspruch 8, **dadurch gekennzeichnet, dass** die Rotorwelle (44) an einem oder mehreren Verbindungsringen (16) montiert ist.

10. Motor nach Anspruch 8 oder 9, **dadurch gekennzeichnet, dass** die Rotorwelle (44) zumindest teilweise nicht von mindestens einem Rotor (10) umgeben wird.

## Claims

1. Rotor (10) for an electric internal or external rotor motor, in particular a torque motor, which rotor comprises axially continuous teeth (12) arranged on a circular path (20) around a rotor axis (18), magnets (14) arranged on the circular path (18) between the teeth (12) for generating poles in the teeth (12), and a connecting portion (16) attached to the teeth (12) and connecting the teeth (12), the teeth (12) each having a front end (26) and a rear end (28) perpendicular to the rotor axis (18), such that the front ends (26) and the rear ends (28) each form an end face (30, 32), the connecting portion (16) being designed as a connecting ring (16) and being arranged at or in one of the two end faces (30, 32), the connecting ring (16) forming a magnetic short-circuit element, so that during operation, a magnetic short circuit occurs between the poles at least at or in the end face (30, 32) adjacent to the connecting ring (16), and the teeth (12) having a tooth thickness (34) in a radial direction and that the connecting ring (16) has a ring thickness (36) in the radial direction, **characterized in that** the connecting ring (16) is formed in a single piece together with the teeth (12) **and that** the ratio of ring thickness (36) to tooth thickness (34) is in a range between 1:5 and 2:3, in particular at 1:2.

2. Rotor (10) according to claim 1, **characterized in that** the connecting ring (16) extends axially away at least substantially from the end face (30, 32) adjacent to the connecting ring (16).

3. Rotor (10) according to either of the preceding claims, **characterized in that** the connecting ring (16) is flush with the teeth (12) in a radially inward direction toward the rotor axis (18), or in a radially outward direction away from the rotor axis (18).

4. Rotor (10) according to any of the preceding claims, **characterized in that** the teeth (12) have a tooth length (38) in an axial direction, which tooth length extends between the end faces (30, 32),
**in that** the connecting ring (16) has a ring length (40) in the axial direction, and
**in that** the ring length (40) is smaller than the tooth length (38).

5. Rotor (10) according to claim 4, **characterized in that** the ratio of ring length (38) to tooth length (40) is in a range between 1:10 and 1:3, especially at 1:6.

6. Rotor (10) according to any of the preceding claims, **characterized in that** holes (42) extending in the axial direction are provided in the teeth (12), which holes are for mounting the connecting ring (16) and/or for mounting a rotor shaft (44).

7. System comprising at least two rotors (10) according to claims 1 to 6 arranged axially behind one another, **characterized in that** at least one connecting ring (16) is provided between two adjacent rotors (10).

8. Electric internal or external rotor motor, in particular torque motor, comprising a rotor (10) according to claims 1 to 6 or comprising a system according to claim 7, **characterized in that** at least one stator having at least three coils for generating a magnetic flux is arranged around the rotor (10) or the rotors (10), the stator interacting with the poles of the rotor (10) in order to generate the rotational movement of the rotor (10) or of the rotor shaft (44).

9. Motor according to claim 8, **characterized in that** the rotor shaft (44) is mounted on one or more connecting rings (16).

10. Motor according to claim 8 or 9, **characterized in that** the rotor shaft (44) is at least in part not surrounded by at least one rotor (10).

## Revendications

1. Rotor (10) pour un moteur électrique à rotor intérieur ou extérieur, en particulier un moteur à couple, avec des dents (12) disposées sur une trajectoire circulaire (20) autour d'un axe du rotor (18), formées de manière continue en direction axiale, avec des aimants (14) disposés sur la trajectoire (18) entre les dents (12) pour générer des pôles dans les dents (12), avec une section de liaison (16) adjacente aux dents (12) et reliant les dents (12), les dents (12) présentant chacune, perpendiculairement à l'axe du rotor (18), une face avant (26) et une face arrière (28), de sorte que les faces avant (26) et les faces arrière (28) forment respectivement une face d'extrémité (30, 32), la section de liaison (16) étant formée en tant qu'anneau de liaison (16) et étant disposée sur ou dans l'une des deux faces d'extrémité (30, 32), l'anneau de liaison (16) constituant un élément de court-circuit magnétique, de sorte qu'en fonctionnement un court-circuit magnétique entre les pôles se produit au moins sur ou dans la face d'extrémité (30, 32) adjacente à l'anneau de liaison (16), et que les dents (12) présentent en direction radiale une épaisseur de dent (34) et que l'anneau de liaison (16) présente en direction radiale une épaisseur de l'anneau (36), **caractérisé en ce que** l'anneau de liaison (16) est réalisé d'une seule pièce avec les dents (12) et que le rapport épaisseur de l'anneau (36) à épaisseur de dent (34) se situe dans une plage comprise entre 1:5 et 2:3, en particulier à 1:2.

2. Rotor (10) selon la revendication 1, **caractérisé en ce que** l'anneau de liaison (16) s'étend axialement au moins pour l'essentiel à partir de la face d'extrémité (30, 32) adjacente à l'anneau de liaison (16).

3. Rotor (10) selon l'une quelconque des revendications précédentes, **caractérisé en ce que** l'anneau de liaison (16) se termine à fleur avec les dents (12) dans la direction radiale orientée vers l'intérieur, vers l'axe du rotor (18), ou dans la direction radiale orientée vers l'extérieur, à l'écart de l'axe du rotor (18).

4. Rotor (10) selon l'une quelconque des revendications précédentes, **caractérisé en ce que** les dents (12) présentent en direction axiale une longueur de dent (38) qui s'étend entre les faces d'extrémité (30, 32),
que l'anneau de liaison (16) présente en direction axiale une longueur de l'anneau (40), et
que la longueur de l'anneau (40) est inférieure à la longueur de dent (38).

5. Rotor (10) selon la revendication 4, **caractérisé en ce que** le rapport longueur de l'anneau (38) sur longueur de dent (40) se situe dans une plage comprise entre 1:10 et 1:3, en particulier à 1:6.

6. Rotor (10) selon l'une quelconque des revendications précédentes, **caractérisé en ce que** des trous (42) s'étendant en direction axiale dans les dents (12) pour le montage de l'anneau de liaison (16) et/ou pour le montage d'un arbre du rotor (44) sont prévus.

7. Système composé d'au moins deux rotors (10) disposés axialement l'un derrière l'autre selon les revendications 1 à 6, **caractérisé en ce que** au moins un anneau de liaison (16) est prévu entre deux rotors (10) adjacents.

8. Moteur électrique à rotor intérieur ou extérieur, en particulier moteur à couple, avec un rotor (10) selon les revendications 1 à 6 ou avec un système selon la revendication 7, **caractérisé en ce que** autour du rotor (10) ou les rotors (10), au moins un stator comportant au moins trois bobines est disposé pour générer un flux magnétique, le stator coopérant avec les pôles du rotor (10) pour générer le mouvement de rotation du rotor (10) ou de l'arbre du rotor (44).

9. Moteur selon la revendication 8, **caractérisé en ce que** l'arbre du rotor (44) est monté sur un ou plusieurs anneaux de liaison (16).

10. Moteur selon la revendication 8 ou 9, **caractérisé en ce que** l'arbre du rotor (44) n'est pas, au moins en partie, entouré par au moins un rotor (10).
